# EUROPÄISCHE PATENTSCHRIFT

(11) **EP 2 729 319 B1**
(45) Veröffentlichungstag und Bekanntmachung des Hinweises auf die Patenterteilung: **08.03.2017**
(21) Anmeldenummer: 12729872.7
(22) Anmeldetag: 19.06.2012
(51) Int. Cl.: B60K 13/04, B60K 15/035

(54) **FLUIDBEHÄLTER MIT EINFÜLLROHR**
FLUID VESSEL WITH FILLER PIPE
CONTENEUR DE FLUIDES PRÉSENTANT UN TUBE D'ALIMENTATION

(30) Priorität: 05.07.2011 DE 102011106663
(43) Veröffentlichungstag der Anmeldung: 14.05.2014
(73) Patentinhaber: Volkswagen Aktiengesellschaft, 38440 Wolfsburg (DE)
(72) Erfinder: KRAUS, Anton, 38442 Wolfsburg (DE)
(86) Internationale Anmeldenummer: PCT/EP2012/002570
(87) Internationale Veröffentlichungsnummer: WO 2013/004346

(56) Entgegenhaltungen:
- DE-A1- 4 343 498
- DE-A1- 19 801 512
- DE-A1- 19 859 117
- GB-A- 2 343 427
- US-A- 5 535 772

## Beschreibung

Die Erfindung betrifft einen Fluidbehälter, insbesondere für ein Abgasreinigungsfluid zum Behandeln von Abgas einer Brennkraftmaschine, insbesondere für eine wässrige Harnstofflösung, wobei der Fluidbehälter ein Einfüllrohr aufweist, welches fluidleitend mit einem Innenraum des Fluidbehälters verbunden ist und an einem vom Innenraum des Fluidbehälters abgewandten Ende einen Befüllkopf aufweist und mit einem lösbaren Tankdeckel verschlossen ist, wobei der Fluidbehälter und das Einfüllrohr derart ausgebildet und angeordnet sind, dass in einer Einbaulage des Fluidbehälters eine geodätisch höchste Stelle des Fluidbehälters geodätisch tiefer liegt als der Befüllkopf, gemäß dem Oberbegriff des Patentanspruchs 1.

Behälter für Abgasreinigungsfluide, wie beispielsweise SCR-Behälter (selektive katalytische Reduktion - Selective Catalytic Reduction) für Hamstofflösungen benötigen aufgrund des Verbrauchs des Abgasreinigungsfluides, von Temperaturänderungen oder Änderungen des atmosphärischen Luftdrucks (beispielsweise bei Bergfahrt oder Luftfrachttransport) eine Be- und Entlüftung. Diese ist aufgrund der beschränkten Unterdruckfestigkeit von Kunststoffbehältern z.B. aus HDPE (PE-HD: schwach verzweigte Polymerketten von Polyethylen, hohe Dichte zwischen 0,94 g/cm³ und 0,97 g/cm³, "HD" steht für "high density.") notwendig.

Aus der DE 43 43 498 A1 ist ein Kraftstofftank mit einem Füllrohr und einem Lüftungsrohr bekannt. Das Lüftungsrohr mündet über ein Füllstandsbegrenzungsventil in einen Innenraum des Kraftstofftanks. Im Füllrohr ist eine Aufnahme für eine Düse einer Zapfpistole ausgebildet. Das Lüftungsrohr verbindet den Innenraum des Kraftstofftanks mit der Aufnahme über ein Rückschlagventil. Da Kraftstoff üblicherweise einen sehr niedrigen Gefrierpunkt hat und üblicherweise derartig niedrige Umgebungstemperaturen nicht vorkommen, kommt ein Einfrieren des Fluides im Be- und Entlüftungssystem des Kraftstofftanks normalerweise nicht vor und es müssen hierfür auch keine Gegenmaßnahmen im Kraftstofftank vorgesehen sein.

Bei derartigen herkömmlichen Befüll- und Entlüftungssystemen für Fluidbehälter ist bei Fluiden, welche bereits bei Temperaturen beispielsweise um -10°C gefrieren, wie dies bei wässrigen Harnstofflösungen zur Behandlung von Abgas einer Brennkraftmaschine der Fall ist, besonders darauf zu achten, dass nach einem Betankungsvorgang kein Fluid im Lüftungsrohr bzw. Füllrohr zurückbleibt und dort ggf. gefriert und dadurch entsprechende Entlüftungsvorrichtungen blockiert. Bei einer blockierten Entlüftungsvorrichtung kann es nämlich bei der Entnahme von Fluid aus dem Fluidbehälter dazu kommen, dass der Fluidbehälter aufgrund mangelnder Unterdruckfestigkeit zusammengezogen und dabei ggf. beschädigt wird. Die mit der Be- und Entlüftung zusammenhängenden Bauteile müssen daher Eisfest sein, was zu hohen Herstellungskosten führt. DE 27 52 645 zeigt einen gattungsgemäßen Fluidbehälter.

Der Erfindung liegt die Aufgabe zugrunde, einen Behälter der o.g. mit hoher Eisdruckfestigkeit, wenigen Bauteilen und einfachem mechanischen Aufbau zur Verfügung zu stellen.

Diese Aufgabe wird erfindungsgemäß durch einen Fluidbehälter der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Fluidbehälter der o.g. Art erfindungsgemäß vorgesehen, dass im Tankdeckel und an der in Einbaulage des Fluidbehälters geodätisch höchsten Stelle des Fluidbehälters jeweils eine Entlüftungsvorrichtung angeordnet ist.

Dies hat den Vorteil, dass keine zusätzlichen Maßnahmen erforderlich sind, um ein Übertanken des Behälters auch bei hohen Füllgeschwindigkeiten zu verhindern und gleichzeitig ein Ablaufen des Fluides nach einem Betankungsvorgang aus dem Einfüllrohr zu gewährleisten, so dass ein Einfrieren von Fluid im Einfüllrohr bei niedrigen Umgebungstemperaturen wirksam vermieden ist.

Hohe Füllgeschwindigkeiten mit einer schnellen Entlüftung des Innenraumes des Fluidbehälters während des Befüllvorgangs mit einem Fluid und gleichzeitig einer Begrenzung des Pegels in dem Fluidbehälter erzielt man dadurch, dass ein Tauchrohr derart vorgesehen ist, dass dieses den Innenraum des Behälters mit dem Befüllkopf fluidleitend verbindet, wobei das Tauchrohr an einem dem Innenraum des Fluidbehälters zugewandten Ende in den Innenraum hinein ragt.

Ein unerwünschtes Aufsteigen von Fluid über das Tauchrohr bis in den Befüllkopf wird dadurch wirksam vermieden, dass das Tauchrohr über eine Entlüftungsleitung mit dem Befüllkopf fluidleitend verbunden ist, wobei in der Entlüftungsleitung ein Ausperlbehälter angeordnet ist.

Eine unbeabsichtigte Rückströmung über das Einfüllrohr aus dem Fluidbehälter heraus wird dadurch wirksam unterbunden, dass im Einfüllrohr ein Rückschlagventil derart angeordnet und ausgebildet ist, dass dieses Rückschlagventil eine Fluidströmung in Richtung des Innenraumes des Fluidbehälters frei gibt und in entgegengesetzter Richtung sperrt.

Eine vollständige Befüllung des Fluidbehälters ohne einen unerwünschten, übermäßigen Druckaufbau im Fluidbehälter während des Befüllvorgangs wird dadurch erzielt, dass in Einbaulage des Fluidbehälters das Rückschlagventil geodätisch höher angeordnet ist als die geodätisch höchste Stelle des Fluidbehälters. Weiterhin muss hierdurch das Rückschlagventil nicht eisdruckfest ausgebildet sein.

Eine einfache und funktionssichere Entlüftungsfunktion erzielt man dadurch, dass die Entlüftungsvorrichtung im Tankdeckel und/oder an der geodätisch höchsten Stelle als Membran, insbesondere als PTFE-Membran (Polytetrafluorethylen) ausgebildet ist.

Besonders hohe Befüllgeschwindigkeiten erzielt man dadurch, dass die Entlüftungsvorrichtung an der geodätisch höchsten Stelle des Fluidbehälters als Drosselbohrung ausgebildet ist, wobei eine fluidleitende Verbindung von der Drosselbohrung zu dem Befüllkopf ausgebildet ist.

Die Erfindung wird im Folgenden anhand der Zeichnung näher erläutert. Diese zeigt in
- Fig. 1: eine erste bevorzugte Ausführungsform eines erfindungsgemäßen Fluidbehälters in schematischer Schnittansicht,
- Fig. 2: eine zweite bevorzugte Ausführungsform eines erfindungsgemäßen Fluidbehälters in schematischer Schnittansicht und
- Fig. 3: das Detail Z von Fig. 2 in schematischer Schnittansicht.

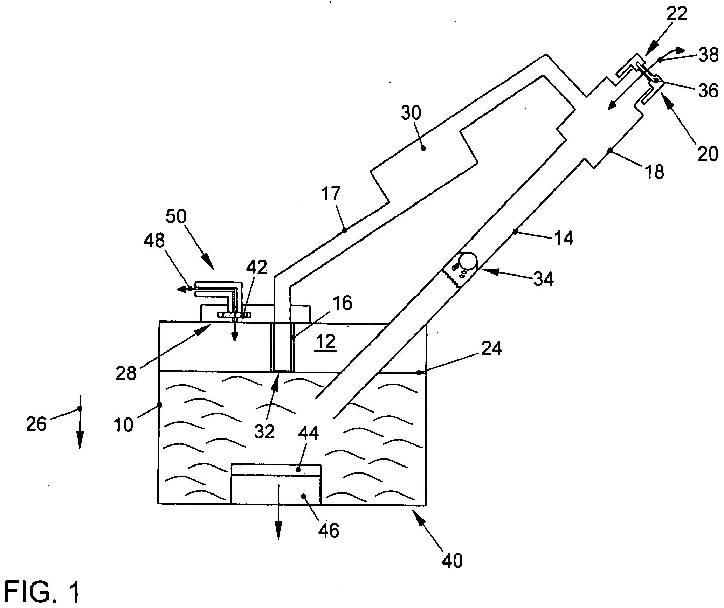

Die in Fig. 1 dargestellte, erste bevorzugte Ausführungsform eines erfindungsgemäßen Fluidbehälters 10 ist in Einbaulage dargestellt, wobei eine Schwerkraftrichtung 26 in Fig. 1 nach unten gerichtet ist, und weist einen Innenraum 12 auf, in den ein Einfüllrohr 14 und ein Tauchrohr 16 mündet. Das Einfüllrohr 14 dient zum Befüllen des Innenraumes 12 des Fluidbehälters 10 mit einem Fluid 24, wie beispielsweise einer wässrigen Harnstofflösung zur Behandlung von Abgas einer nicht dargestellten Brennkraftmaschine. Eine derartige Harnstofflösung hat die Eigenschaft, dass diese bei ca. -11°C Umgebungstemperatur gefriert. Wegen dieser besonderen Eigenschaft des Fluides 24 müssen bestimmte Vorkehrungen getroffen werden, um die Funktionsfähigkeit des Fluidbehälters 10 bei allen vorkommenden Umgebungstemperaturen zu gewährleisten.

In dem Einfüllrohr 14 ist ein Befüllkopf 18 an einem von dem Innenraum 12 abgewandten Ende 22 angeordnet und dieses Ende 22 ist mit einem lösbaren Tankdeckel 20 verschlossen. Der Befüllkopf 18 und das Ende 22 mit dem Tankdeckel 20 befinden sich geodätisch höher als eine geodätisch höchste Stelle 28 des Fluidbehälters 10. Das Tauchrohr 16 ragt in den Innenraum 12 hinein und ist über eine Entlüftungsleitung 17 mit dem Befüllkopf 18 derart verbunden, dass über das Tauchrohr 16 und die Entlüftungsleitung 17 eine fluidleitende Verbindung zwischen dem Innenraum 12 und dem Befüllkopf 18 hergestellt ist. In der Entlüftungsleitung 17 ist ein Ausperlbehälter 30 angeordnet. In dem Einfüllrohr 14 ist ein Rückschlagventil 34 angeordnet, welches einen Fluidstrom in Richtung des Innenraumes 12 des Fluidbehälters 10 zulässt und einen Fluidstrom in entgegengesetzter Richtung, also vom Innenraum 12 des Fluidbehälters 10 über das Einfüllrohr 14 zum Befüllkopf 18, blockiert.

An einem Boden 40 des Fluidbehälters 10 ist an einer geodätisch tiefsten Stelle eine Entnahmevorrichtung 46 zur Entnahme von Fluid 24 aus dem Fluidbehälter 10 vorgesehen, um das Fluid 24 einer bestimmungsgemäßen Verwendung zuzuführen. Diese bestimmungsgemäße Verwendung ist beispielsweise eine Abgasbehandlung von Abgasen einer Brennkraftmaschine in einem Kraftfahrzeug mit dem Fluid 24 zur Schadstoffreduktion.

In dem Tankdeckel 20 ist eine erste Be- und Entlüftungsvorrichtung 36, wie beispielsweise ein Ventil bzw. eine PTFE-Membran (Polytetrafluorethylen) vorgesehen. Die erste Be- und Entlüftungsvorrichtung 36 ist dicht bzw. undurchlässig für Flüssigkeiten bzw. für das Fluid 24 und durchlässig für Gase, wie mit Pfeil 38 angedeutet. Auf diese Weise kann mittels des Durchtritts von Gasen durch die erste Be- und Entlüftungsvorrichtung 36 ein Druckausgleich mit der Umgebung erfolgen. Bei einer Entnahme von Fluid 24 aus dem Fluidbehälter 10 entsteht in dem Innenraum 12 ein Unterdruck relativ zu einer Umgebung. Dies würde unter Einwirkung eines Umgebungsüberdruckes in unerwünschter Weise ggf. zu einem Zusammenziehen und damit einer plastischen Verformung des Fluidbehälters 10 mit ggf. daraus resultierender Beschädigung des Fluidbehälters 10 führen. Der Druckausgleich bzw. die Be- und Entlüftung des Innenraumes 12 des Fluidbehälters 10 über die erste Be- und Entlüftungsvorrichtung 36 verhindert Druckdifferenzen zwischen dem Innenraum 12 des Fluidbehälters 10 und der Umgebung und damit etwaige Beschädigungen des Fluidbehälters 10 durch plastische Verformung aufgrund von Druckunterschieden zwischen dem Innenraum 12 und der Umgebung.

Ein dem Innenraum 12 zugewandtes, offenes Ende 32 des Tauchrohres 16 dient als Entlüftung des Innenraumes 12 während des Befüllens des Fluidbehälters 10 und begrenzt gleichzeitig den maximalen Fluidpegel in dem Innenraum 12. Sobald nämlich bei einem Befüllvorgang des Fluidbehälters 10 über das Einfüllrohr 14 mittels einer Zapfpistole (nicht dargestellt) der Fluidpegel das offenen Ende 32 des Tauchrohres 16 erreicht, steigt Fluid 24 in dem Tauchrohr 16 und der Entlüftungsleitung 17 auf und flutet den Befüllkopf 18. Dies führt dazu, dass ein Abschaltmechanismus der Zapfpistole, die mindestens teilweise in den Befüllkopf 18 hinein ragt, auslöst und ein weiteres Befüllen des Fluidbehälters 10 stoppt. Unmittelbar nach dem Abschalten der Zapfpistole befindet sich somit Fluid 24 in dem Tauchrohr 16, der Entlüftungsleitung 17 und dem Einfüllrohr 14 bis hinauf zum Befüllkopf 18.

Sollte zu diesem Zustand beispielsweise ein mit dem Fluidbehälter 10 ausgerüstetes Fahrzeug für längere Zeit bei Außentemperaturen kleiner dem Gefrierpunkt des Fluides 24 abgestellt werden, wäre eine Belüftung des Fluidbehälters 10 in einem anschließenden längeren Fahrbetrieb, bei dem kontinuierlich Fluid 24 aus dem Innenraum 12 beispielsweise zur Abgasbehandlung entnommen wird, nicht sichergestellt, da eine an dem Boden 40 (geodätisch tiefste Stelle des Fluidbehälters 10) angeordnete Tankheizung 44 die Entlüftungswege (im Wesentlichen die Entlüftungsleitung 17) nicht auftauen kann. Um in diesem Zustand eine Verformung des Fluidbehälters 10 durch Verbrauch des Fluides 24 zu verhindern, ist es erfindungsgemäß vorgesehen, dass an der geodätisch höchsten Stelle 28 des Fluidbehälters 10 eine zweite Be- und Entlüftungsvorrichtung 42 beispielsweise in Form eines Ventils vorgesehen ist.

In der ersten bevorzugten Ausführungsform gemäß Fig. 1 ist diese zweite Be- und Entlüftungsvorrichtung 42 als PTFE-Membran (Polytetrafluorethylen) ausgebildet, die über ein Rohr 50 mit der Umgebung verbunden ist. Die zweite Be- und Entlüftungsvorrichtung 42 ist dicht bzw. undurchlässig für Flüssigkeiten bzw. für das Fluid 24 und durchlässig für Gase, wie mit Pfeil 48 angedeutet. Auf diese Weise kann mittels des Durchtritts von Gasen durch die erste Be- und Entlüftungsvorrichtung 36 ein Druckausgleich mit der Umgebung erfolgen. Durch die Anordnung der zweiten Be- und Entlüftungsvorrichtung 42 kann über diese ein Druckausgleich zwischen dem Innenraum 12 des Fluidbehälters 10 und der Umgebung auch dann erfolgen, wenn sich in dem Tauchrohr 16 bzw. der Entlüftungsleitung 17 ggf. gefrorenes Fluid 24 befindet. Allerdings ist dies grundsätzlich durch die zweite Be- und Entlüftungsvorrichtung 42 vermieden, da das in dem Tauchrohr 16, der Entlüftungsleitung 17 und dem Einfüllrohr 14 am Ende eines Befüll- bzw. Betankungsvorganges des Fluidbehälters 10 mit Fluid 24 ggf. vorhandene Fluid 24 in den Innenraum 12 des Fluidbehälters 10 abströmen kann, da sich ein entsprechender Überdruck in dem Innenraum 12, welcher ein solches Abströmen verhindern würde, über die zweite Be- und Entlüftungsvorrichtung 42 abbauen kann. Gleichzeitig wird ein sich durch das Abströmen ggf. in der Entlüftungsleitung 17 und dem Einfüllrohr 14 ergebener Unterdruck über die erste Be- und Entlüftungsvorrichtung 36 im Tankdeckel 20 abgebaut. Ein Zufrieren auch der zweiten Be- und Entlüftungsvorrichtung 42 ist nicht möglich, da sich dieses an der geodätisch höchsten Stelle des Fluidbehälters 10 und damit immer oberhalb des Fluidpegels sowie beabstandet von dem Fluidpegel befindet.

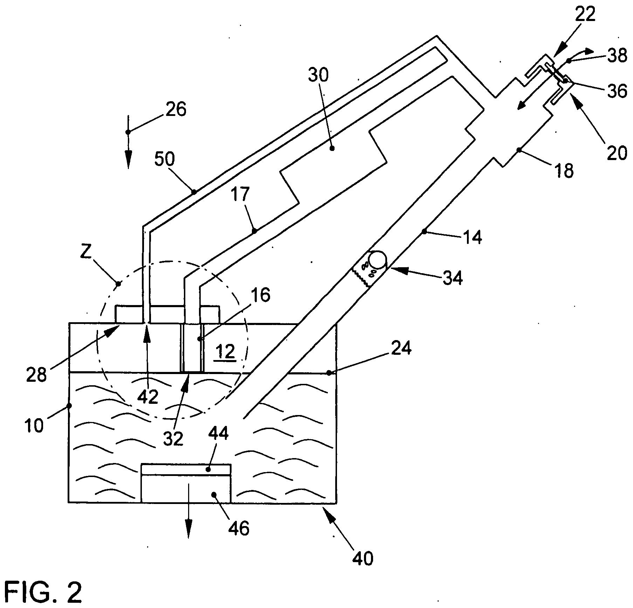

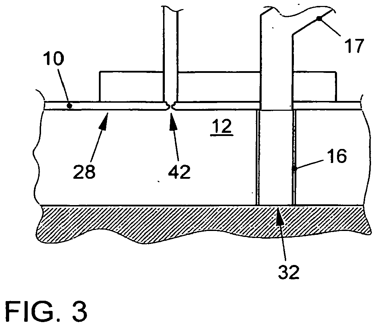

Eine zweite, alternative, bevorzugte Ausführungsform eines erfindungsgemäßen Fluidbehälters 10 ist in Fig. 2 und 3 dargestellt, wobei funktionsgleiche Teile in Fig. 2 und 3 mit gleichen Bezugszeichen wie in Fig. 1 bezeichnet sind, so dass zu deren Erläuterung auf die obige. Beschreibung der Fig. 1 verwiesen wird. Im Unterschied zur ersten Ausführungsform gemäß Fig. 1 ist bei der zweiten Ausführungsform gemäß Fig. 2 und 3 die zweite Be- und Entlüftungsvorrichtung 42 nicht als Membran sondern als Drosselbohrung ausgebildet und das Rohr 50 mündet nicht in die Umgebung, sondern in den Befüllkopf 18. Hierdurch erfolgt ein Gasaustausch mit der Umgebung ausschließlich über die erste Be- und Entlüftungsvorrichtung 36, wie mit Pfeil 38 angedeutet. Das Rohr 50 umgeht das Tauchrohr 16 und das Einfüllrohr 14, so dass eine Entlüftung des Innenraumes 12 auch dann erfolgen kann, wenn Tauchrohr 16 und Einfüllrohr 14 mit Fluid 24 gefüllt sind. Auf diese Weise ist auch bei der zweiten Ausführungsform ein Abströmen von Fluid 24 aus dem Tauchrohr 16 und dem Einfüllrohr 14 gewährleistet. Die Drosselbohrung hat beispielsweise einen Durchmesser von kleiner 1,5 mm, wodurch eine gute Entlüftung von Gas bzw. ein gutes Abströmen von Gas aus dem Innenraum 12 des Fluidbehälters 10 zum Befüllkopf 18 erzielt wird.

Die nachfolgende Diskussion von weiteren Aspekten der Erfindung gilt unabhängig von den zuvor konkret beschriebenen Ausführungsformen für die Erfindung ganz allgemein, soweit nichts anderes ausdrücklich erwähnt ist.

Durch die Be- und Entlüftung über die jeweilige zweite Be- und Entlüftungsvorrichtung 42 erfolgt nach abgeschlossenem Befüllvorgang ein Druckausgleich bis Atmosphärendruck bzw.
Umgebungsdruck. Durch das Nachströmen von Luft durch die erste Be- und Entlüftungsvorrichtung 36 im Tankdeckel 20 wird der Füllspiegel im Einfüllrohr 14 und in dem Tauchrohr 16 bzw. der Entlüftungsleitung 17 langsam absacken. Damit müssen das Einfüllrohr 16 und Komponenten davon, insbesondere das Rückschlagventil 34, nicht eisdruckfest ausgeführt sein. Weiter ist auch unter ungünstigsten Bedingungen, mit gefrorenem Fluid 24 im Einfüllrohr 14 und langem Fahrbetrieb eines mit dem Fluidbehälter 10 ausgerüsteten Kraftfahrzeugs mit Entnahme von Fluid aus dem Fluidbehälter 10, immer eine Belüftung des Innenraumes 12 des Fluidbehälters 10 möglich.

Die Drosselbohrung ermöglicht Füllgeschwindigkeiten für eine Zapfventilbetankung des Fluidbehälters 10 mit bis zu 40 l/min.

Bei der Ausführungsvariante mit Drosselbohrung (Fig. 2 und 3) erfolgt der Druckausgleich über die Drossel und das Rohr 50 (Anschlussleitung zum Befüllkopf 18) und dann über den Tankdeckel 20. Da in dem Rohr 50 vor einem Betankungsvorgang mit leerem oder teilentleertem Fluidbehälter 10 kein Fluid steht, kann hier die Luft aus dem Innenraum 12 entweichen, ohne durch eine Flüssigkeitssäule durchperlen zu müssen. Die Größe der Drosselbohrung wird derart gewählt, dass bei niedrigen Füllgeschwindigkeiten eine akzeptable Nachtankmenge erreicht wird und bei Fällen, in denen das Fluid 24 oberhalb der Drossel steht, das Fluid 24 ablaufen kann. Die Anordnung des Eintritts der zweiten Be- und Entlüftungsvorrichtung 42 in den Innenraum 12 ist an einer bzgl. der Schwerkraftrichtung 26 möglichst hohen Stelle gewählt. Vorteil hier ist, dass auch bei hohen Füllgeschwindigkeiten die Nachtankmenge durch die definierte Leckage in der Drosselbohrung begrenzt wird.

Bei der Ausführungsvariante mit Membran (Fig. 1) kann während des Nachtankvorganges Gas aus dem Totvolumen über die Membran entweichen. Hier ist für eine Betankung mit hohen Füllgeschwindigkeiten eine Druckhaltefunktion vorgesehen, insbesondere bei Einfüllrohren 14 mit großem geodätischem Höhenunterschied zwischen Füllpegel im Innenraum 12 und Befüllkopf 18, um ein rechtzeitiges Abschalten des Zapfventils zu gewährleisten.

Um im Fahrbetrieb eines mit dem erfindungsgemäßen Fluidbehälter 10 ausgerüsteten Kraftfahrzeugs den Eintritt von Fluid 24 in die Entlüftungsleitung 50 durch die Drosselbohrung zu behindern, ist ein Schwappschutz vorgesehen, welcher beispielsweise als verlängertes Rohr ausgeführt ist und im Innenraum 12 vor der Drosselbohrung angeordnet ist.

Die Drosselbohrung und das Tauchrohr sind gemäß einer vorteilhaften Weiterbildung der Erfindung als ein Bauteil ausgebildet, welches mit einer Schweißung am Fluidbehälter 10 angebracht wird.

Anschlussnippel (nicht dargestellt) am Befüllkopf 18 für die Be- und Entlüftung und die Betankungsentlüftung sind beispielsweise als ein Bauteil (Doppelnippel) ausgebildet.

Das Rückschlagventil 34 ist außerhalb des Fluidbehälters 10 an einer Koppelstelle angeordnet, die in der Regel für die getrennte Montage des Fluidbehälters 10 und des Einfüllrohrs 14 an einem Montageband genutzt wird.

Das Rückschlagventil 34 ist beispielsweise als Folien-, federbelastetes Kugel- oder federbelastetes Klappenventil ausgebildet.

### Bezugszeichenliste

- 10: Fluidbehälter
- 12: Innenraum des Fluidbehälters 10
- 14: Einfüllrohr
- 16: Tauchrohr
- 17: Entlüftungsleitung
- 18: Befüllkopf
- 20: Tankdeckel
- 22: von dem Innenraum 12 abgewandtes Ende des Einfüllrohres 14
- 24: Fluid
- 26: Schwerkraftrichtung
- 28: geodätisch höchste Stelle des Fluidbehälters 10
- 30: Ausperlbehälter
- 32: dem Innenraum 12 zugewandtes, offenes Ende des Tauchrohres 16
- 34: Rückschlagventil
- 36: erste Be-/Entlüftungsventil am Tankdeckel
- 38: Pfeil: Gasdurchtritt durch erste Be- und Entlüftungsvorrichtung 36
- 40: Boden (geodätisch tiefste Stelle des Fluidbehälters 10)
- 42: zweite Be- und Entlüftungsvorrichtung an der geodätisch höchsten Stelle des Fluidbehälters
- 44: Tankheizung
- 46: Entnahmevorrichtung
- 48: Pfeil: Gasdurchtritt durch zweite Be- und Entlüftungsvorrichtung 42
- 50: Rohr

## Patentansprüche

1. Fluidbehälter (10), insbesondere Flüssigkeitsbehälter, insbesondere für ein Abgasreinigungsfluid zum Behandeln von Abgas einer Brennkraftmaschine, insbesondere für eine wässrige Harnstofflösung, wobei der Fluidbehälter (10) ein Einfüllrohr (14) aufweist, welches fluidleitend mit einem Innenraum (12) des Fluidbehälters (10) verbunden ist und an einem vom Innenraum (12) des Fluidbehälters (10) abgewandten Ende (22) einen Befüllkopf (18) aufweist und mit einem lösbaren Tankdeckel (20) verschlossen ist, wobei der Fluidbehälter (10) und das Einfüllrohr (14) derart ausgebildet und angeordnet sind, dass in einer Einbaulage des Fluidbehälters (10) eine geodätisch höchste Stelle (28) des Fluidbehälters (10) geodätisch tiefer liegt als der Befüllkopf (18), **dadurch gekennzeichnet, dass** im Tankdeckel (20) und an der in Einbaulage des Fluidbehälters (10) geodätisch höchsten Stelle (28) des Fluidbehälters (10) jeweils eine Entlüftungsvorrichtung (36, 42) angeordnet ist, wobei die Entlüftungsvorrichtung (42) an der geodätisch höchsten Stelle (28) als Membran ausgebildet ist.

2. Fluidbehälter (10) nach Anspruch 1, **dadurch gekennzeichnet, dass** ein Tauchrohr (16) derart vorgesehen ist, dass dieses den Innenraum (12) des Fluidbehälters (10) mit dem Befüllkopf (18) fluidleitend verbindet, wobei das Tauchrohr (16) an einem dem Innenraum (10) des Fluidbehälters (10) zugewandten Ende (32) in den Innenraum (12) hinein ragt.

3. Fluidbehälter (10) nach Anspruch 2, **dadurch gekennzeichnet, dass** das Tauchrohr (14) über eine Entlüftungsleitung mit dem Befüllkopf fluidleitend verbunden ist, wobei in der Entlüftungsleitung ein Ausperlbehälter angeordnet ist.

4. Fluidbehälter nach mindestens einem der vorhergehenden Ansprüche, **dadurch gekennzeichnet, dass** im Einfüllrohr (14) ein Rückschlagventil (34) derart angeordnet und ausgebildet ist, dass dieses Rückschlagventil (34) eine Fluidströmung in Richtung des Innenraumes (12) des Fluidbehälters (10) frei gibt und in entgegengesetzter Richtung sperrt.

5. Fluidbehälter (10) nach Anspruch 4, **dadurch gekennzeichnet, dass** in Einbaulage des Fluidbehälters (10) das Rückschlagventil (34) geodätisch höher angeordnet ist als die geodätisch höchste Stelle (28) des Fluidbehälters (10).

6. Fluidbehälter (10) nach mindestens einem der vorhergehenden Ansprüche, **dadurch gekennzeichnet, dass** die Entlüftungsvorrichtung (36) im Tankdeckel (20) als Membran, insbesondere als PTFE-Membran, Polytetrafluorethylen, ausgebildet ist.

7. Fluidbehälter (10) nach mindestens einem der vorhergehenden Ansprüche, **dadurch gekennzeichnet, dass** die Entlüftungsvorrichtung (42) an der geodätisch höchsten Stelle (28) als PTFE-Membran, Polytetrafluorethylen, ausgebildet ist.

## Claims

1. Fluid vessel (10), in particular liquid vessel, in particular for an exhaust-gas purification fluid for the treatment of exhaust gas of an internal combustion engine, in particular for an aqueous urea solution, wherein the fluid vessel (10) has a filler pipe (14) which is connected in fluid-conducting fashion to an interior (12) of the fluid vessel (10) and which, at an end (22) averted from the interior (12) of the fluid vessel (10), has a filler head (18) and is closed by means of a detachable tank cap (20),
wherein the fluid vessel (10) and the filler pipe (14) are designed and arranged such that, in an installed position of the fluid vessel (10), a geodetically highest point (28) of the fluid vessel (10) lies geodetically lower than the filler head (18), **characterized in that** in each case one deaeration device (36, 42) is arranged in the tank cap (20) and at the point which is the geodetically highest point (28) of the fluid vessel (10) when the fluid vessel (10) is in the installed position, wherein the deaeration device (42) at the geodetically highest point (28) is in the form of a diaphragm.

2. Fluid vessel (10) according to Claim 1,
**characterized in that** an immersion pipe (16) is provided so as to connect the interior (12) of the fluid vessel (10) to the filler head (18) in fluid-conducting fashion, wherein the immersion pipe (16), at an end (32) facing toward the interior (10) of the fluid vessel (10), projects into the interior (12).

3. Fluid vessel (10) according to Claim 2,
**characterized in that** the immersion pipe (14) is connected in fluid-conducting fashion to the filler head via a deaeration line, wherein a bubble section is arranged in the deaeration line.

4. Fluid vessel according to at least one of the preceding claims, **characterized in that** a check valve (34) is arranged and formed in the filler pipe (14) such that said check valve (34) permits a fluid flow in the direction of the interior (12) of the fluid vessel (10) and blocks a fluid flow in the opposite direction.

5. Fluid vessel (10) according to Claim 4, **characterized in that**, when the fluid vessel (10) is in the installed position, the check valve (34) is arranged geodetically higher than the geodetically highest point (28) of the fluid vessel (10).

6. Fluid vessel (10) according to at least one of the preceding claims, **characterized in that** the deaeration device (36) in the tank cap (20) is in the form of a diaphragm, in particular a PTFE, polytetrafluoroethylene, diaphragm.

7. Fluid vessel (10) according to at least one of the preceding claims, **characterized in that** the deaeration device (42) at the geodetically highest point (28) is in the form of a PTFE, polytetrafluoroethylene, diaphragm.

## Revendications

1. Récipient de fluide (10), en particulier récipient de liquide, en particulier pour un fluide d'épuration de gaz d'échappement pour le traitement de gaz d'échappement d'un moteur à combustion interne, en particulier pour une solution d'urée aqueuse, le récipient de fluide (10) présentant un tube de remplissage (14) qui est connecté fluidiquement à un espace interne (12) du récipient de fluide (10) et qui présente une tête de remplissage (18) au niveau d'une extrémité (22) opposée à l'espace interne (12) du récipient de fluide (10) et qui est fermé par un couvercle de réservoir amovible (20), le récipient de fluide (10) et le tube de remplissage (14) étant réalisés et disposés de telle sorte que dans une position d'installation du récipient de fluide (10), une zone (28) la plus élevée géodésiquement du récipient de fluide (10) soit située plus bas, géodésiquement, que la tête de remplissage (18),
**caractérisé en ce que** dans le couvercle de réservoir (20) et au niveau de la zone (28) du récipient de fluide (10) la plus élevée géodésiquement, dans la position d'installation du récipient de fluide (10), est à chaque fois disposé un dispositif de désaérage (36, 42), le dispositif de désaérage (42) étant réalisé sous forme de membrane au niveau de la zone (28) la plus élevée géodésiquement.

2. Récipient de fluide (10) selon la revendication 1,
**caractérisé en ce qu'**un tube plongeur (16) est prévu de telle sorte que celui-ci relie fluidiquement l'espace interne (12) du récipient de fluide (10) à la tête de remplissage (18), le tube plongeur (16) pénétrant dans l'espace interne (12) au niveau d'une extrémité (32) tournée vers l'espace interne (10) du récipient de fluide (10).

3. Récipient de fluide (10) selon la revendication 2,
**caractérisé en ce que** le tube plongeur (14) est connecté fluidiquement à la tête de remplissage par le biais d'une conduite de désaérage, un récipient de dissipation de bulles étant disposé dans la conduite de désaérage.

4. Récipient de fluide selon au moins l'une quelconque des revendications précédentes,
**caractérisé en ce qu'**un clapet antiretour (34) est disposé et réalisé dans le tube de remplissage (14) de telle sorte que ce clapet antiretour (34) libère un écoulement fluidique dans la direction de l'espace interne (12) du récipient de fluide (10) et le bloque dans la direction opposée.

5. Récipient de fluide (10) selon la revendication 4,
**caractérisé en ce que** dans la position d'installation du récipient de fluide (10), le clapet antiretour (34) est disposé plus haut géodésiquement que la zone (28) du récipient de fluide (10) la plus haute géodésiquement.

6. Récipient de fluide (10) selon au moins l'une quelconque des revendications précédentes,
**caractérisé en ce que** le dispositif de désaérage (36) dans le couvercle de réservoir (20) est réalisé sous forme de membrane, en particulier sous forme de membrane en PTFE (polytétrafluoroéthylène).

7. Récipient de fluide (10) selon au moins l'une quelconque des revendications précédentes,
**caractérisé en ce que** le dispositif de désaérage (42) est réalisé au niveau de la zone (28) la plus haute géodésiquement sous forme de membrane en PTFE (polytétrafluoroéthylène).
